# EUROPÄISCHE PATENTSCHRIFT

(11) **EP 3 608 233 B1**
(45) Veröffentlichungstag und Bekanntmachung des Hinweises auf die Patenterteilung: **21.10.2020**
(21) Anmeldenummer: 18188048.5
(22) Anmeldetag: 08.08.2018
(51) Int. Cl.: B65B 1/36, B65B 37/08, B65B 37/20

(54) **DOSIERWALZE**
DOSING ROLL
CYLINDRE DOSEUR

(43) Veröffentlichungstag der Anmeldung: 12.02.2020
(73) Patentinhaber: Harro Höfliger Verpackungsmaschinen GmbH, 71573 Allmersbach im Tal (DE)
(72) Erfinder: BRECHT, Sven, 71573 Allmersbach im Tal (DE)
(74) Vertreter: Zurhorst, Stefan

(56) Entgegenhaltungen:
- EP-A1- 2 902 327
- DE-A1-102017 204 083
- DE-U1- 20 118 915
- DE-U1-202007 014 478

## Beschreibung

Die Erfindung betrifft eine Dosierwalze gemäß des Oberbegriffs des Anspruchs 1.

Beispielsweise im Pharmabereich, aber auch im Bereich von Nahrungsergänzungsmitteln oder dgl. werden Pulver verarbeitet, die für die vorgesehene Darreichungsform in präzise abgemessenen Teilmengen bzw. Dosiermengen bereitgestellt werden müssen. Zielbehälter beispielsweise in Form von Blistern, Steckkapseln oder dergleichen werden mit solchen abgemessenen Dosiermengen eines pulvrigen Produkts befüllt, so dass der Verbraucher entsprechende Einheitsdosen zur Verfügung hat und einnehmen kann.

Derartige pulvrige Produkte werden insbesondere auf sogenannten Walzendosierern in einzeln abgemessene Dosiermengen überführt, welche dann in jeweilig zugeordneten Zielbehältern abgefüllt werden. Ein solcher Walzendosierer umfasst eine Dosierwalze mit einem Walzenmantel, der umfangsseitig mit mindestens einer, im Regelfall mit mehreren Dosieröffnungen versehen ist, wobei die Dosieröffnungen innenseitig mittels eines Filterelements begrenzt sind. Das Filterelement wird von einem Spannkern über eine Filterleiste gegen die Innenseite des Walzenmantels gepresst. In der Filterleiste ist ein Druckkanal angeordnet über den die Dosieröffnung durch das Filterelement hindurch mit einem Unterdruck beaufschlagbar ist.

Unter Einwirkung des Unterdrucks wird Pulver in die Dosieröffnungen eingesaugt, wobei sich Dosiermengen des Pulvers bilden, deren Volumen dem Volumen der jeweiligen Dosieröffnung entspricht. Die solchermaßen gebildeten Dosiermengen werden dann aus den Dosieröffnungen ausgestoßen und zum Zielbehälter weitergeleitet.

Aus den vorangegangenen Ausführungen wird deutlich, dass es sich bei der Dosierung mittels eines Walzendosierers um eine volumetrische Dosierung handelt. Angestrebt ist im Regelfall aber eine Dosierung, bei der die abgemessene Dosiermenge eine bestimmte Masse innerhalb einer zulässigen Toleranzbandbreite aufweist. In der Praxis hat sich gezeigt, dass die von einem Walzendosierer volumetrisch bereitgestellten Dosiermengen hinsichtlich der tatsächlich erreichten Masse nicht immer den Anforderungen genügen. Insbesondere bei der Dosierung schlecht fließfähiger pulvriger Produkte kommt es teilweise zu großen Abweichungen von der angestrebten Masse der volumetrisch bereitgestellten Dosiermenge und somit zu einer großen Streuung der Dosiermassen.

Bei einfachen Ausführungsformen im Stand der Technik werden die Filterelemente unmittelbar zwischen Filterleiste und Walzenmantel ohne zusätzliche Dichtungen eingespannt. Eine solche Bauform ist beispielsweise aus DE 20 2007 014 478 U1 bekannt. Bei höheren Anforderungen werden Dichtelemente eingesetzt, welche auf der den Filterelementen zugewandten Seite der Filterleiste positioniert sind. In einer bekannten Bauform ist eine solche Dichtung durch ein selbstklebendes Schaumstoff-Pad gebildet, das auf die Filterleiste geklebt ist. Die Haltbarkeit solcher Pads ist nur begrenzt. Mit zunehmender Dauer verlieren die Pads an Elastizität und müssen demzufolge ausgetauscht bzw. entfernt und entsorgt werden. Alternativ kommen im Stand der Technik Silikonringe zum Einsatz, wofür aufwändige Montage- und Positionierhilfen sowie zugelassene Silikonkleber erforderlich sind.

Der Erfindung liegt deshalb die Aufgabe zugrunde, eine gattungsgemäße Dosierwalze derart weiterzubilden, dass die von der Dosierwalze erzeugten Einzelmassen auf einfache Weise innerhalb eines vorgegebenen Toleranzbereichs gehalten werden können.

Diese Aufgabe wird durch eine Dosierwalze mit den Merkmalen des Anspruchs 1 gelöst.

Die Erfindung basiert zunächst auf der Erkenntnis, dass unerwünschte Schwankungen der tatsächlich erreichten Dosiermassen insbesondere bei der Dosierung von schlecht "fließenden" Pulvern auf Ungenauigkeiten in der Bereitstellung des wirkenden Ansaugunterdrucks zurückzuführen sind. Gemäß der Erfindung wird nun eine höhere Genauigkeit durch eine Dichtung erreicht, die ein auf die Filterleiste aufvulkanisiertes Elastomer ist. Dadurch geht die Dichtung auf ihrer der Filterleiste zugewandten Seite eine stoffschlüssige Verbindung mit der Filterleiste ein. Dies erhöht die Dichtheit zwischen Filterleiste und Dichtung gegenüber Gasen, insbesondere gegenüber Druckluft. Auf diese Weise lässt sich wiederholbar ein exakt angepasster Unterdruck in der Kammer erzeugen, der immer - auch bei der Befüllung der Dosieröffnung mit schlecht fließfähigen fluidartigen Pulvern - für einen ebenso wiederholbaren Füllungsgrad sorgt. Über die wiederholbare Vergleichmäßigung des Füllungsgrades werden auch die tatsächlich erzielten Dosiermassen vergleichmäßigt.

Gleichzeitig ist die Dichtung verliersicher auf der Filterleiste gehalten. Die Montage und Demontage von Filterleiste und Dichtung sind im Vergleich zum Stand der Technik vereinfacht, da die Anwendung eines Klebstoffs entfällt. Montagefehler sind vermieden, was zur Prozesssicherheit beiträgt.

Das aufvulkanisierte Elastomer lässt sich auf seiner der Filterleiste abgewandten Seite aufgrund seiner festen Verbindung zur Filterleiste gut bearbeiten. So kann durch Bearbeitung dieser Seite beispielsweise die Dicke der Dichtung an den zwischen Filterleiste und Innenseite des Walzenmantels zur Verfügung stehenden Raum einfach durch Abtrag einer entsprechenden Schicht angepasst werden. Dies kann insbesondere durch Schleifen geschehen. Durch die Verwendung eines aufvulkanisierten Elastomers als Dichtung kann die Dichtung auch auf der der Innenseite des Walzenmantels zugewandten Seite der Dichtung derart an den Verlauf der Innenseite des Walzenmantels angepasst sein, so dass sich eine ausgeprägte Dichtheit der Verbindung des Druckkanals mit der Dosieröffnung ergibt.

Dadurch, dass die Dichtung ein aufvulkanisiertes Elastomer ist, ist die Dichtungswirkung bei wiederholten Befüllvorgängen ein und derselben Dosieröffnung vergleichbar. In der Folge ist auch der in der Dosieröffnung erreichte Unterdruck bei mehrfach aufeinanderfolgenden Befüllvorgängen vergleichbar. Im Gegensatz zum Stand der Technik, nach dem die Qualität der Klebeverbindung zwischen Dichtpad und Filterleiste und auch die Elastizität des Dichtpads mit der Zeit nachlassen, ist damit gewährleistet, dass der in der Dosieröffnung wirkende Unterdruck und damit auch die Dosiermasse des in die Dosieröffnung angesaugten pulvrigen Produkts immer innerhalb eines gewünschten Toleranzbereichs liegen.

Darüber hinaus ist der Verzicht auf Klebstoff insbesondere in der Nahrungsergänzungs- und Pharmaindustrie vorteilhaft, wo besonders auf eine große Reinheit des in den Zielbehälter gelangenden Endprodukts geachtet werden muss.

In vorteilhafter Weiterbildung der Erfindung erstreckt sich das aufvulkanisierte Elastomer über eine gesamte der Innenseite des Walzenmantels zugewandte Verbindungsfläche der Filterleiste und ist lediglich durch jeweils eine Bohrung zur fluidischen Verbindung des Druckkanals mit je einer Dosieröffnung durchbrochen. Dadurch lässt sich die Dichtung auf einfache Weise herstellen. Die Anzahl und der Abstand der Bohrungen können frei gewählt werden. Auf diese Weise kann die erfindungsgemäße Dichtung für verschiedenste Geometrien verwendet werden, ohne dass sie unterschiedlich vorgefertigt werden muss.

Vorteilhaft weist das aufvulkanisierte Elastomer in einem Bereich um eine Kanalöffnung herum, die an einem der Innenseite des Walzenmantels zugewandten Ende des Druckkanals angeordnet ist, eine Druckfläche zur Anlage an der Innenseite des Walzenmantels auf, die in Richtung auf die Innenseite des Walzenmantels hervorsteht. Dadurch kann die Dichtung mit einer definierten Anlagefläche an der Innenseite des Walzenmantels anliegen.

Zweckmäßig weist die Filterleiste mindestens zwei Kanalöffnungen auf, die in Richtung der Drehachse des Walzenmantels nebeneinander liegen. Dadurch können mindestens zwei Dosieröffnungen gleichzeitig befüllt werden. Vorteilhaft münden die mindestens zwei Kanalöffnungen in denselben Druckkanal. Dadurch können die mindestens zwei Kanalöffnungen und die dazugehörigen Dosieröffnungen von derselben Unterdruckquelle mit Unterdruck beaufschlagt werden. Durch die Verwendung eines aufvulkanisierten Elastomers als Dichtung bei mindestens zwei Kanalöffnungen und mindestens zwei Dosieröffnungen ist die Qualität der Dichtung an den mindestens zwei Kanalöffnungen sehr vergleichbar. Dadurch sind auch die Drücke in den mindestens zwei Dosieröffnungen, die von einer einzigen Unterdruckquelle erzeugt werden, praktisch gleich groß. In der Folge sind die Dosiermassen der in den gleich großen Volumina der mindestens zwei Kanalöffnungen abgefüllten Dosiermengen des pulvrigen Produkts ebenfalls sehr vergleichbar.

In vorteilhafter Weitebildung der Erfindung sind die Druckflächen des aufvulkanisierten Elastomers rechteckig ausgebildet. Dadurch können die Druckflächen zur Anlage an in Richtung der Drehachse der Dosierwalze benachbarten Dosieröffnungen auf einfache Weise hergestellt werden. Hierzu muss lediglich zwischen zwei benachbarten Kanalöffnungen auf der der Filterleiste abgewandten Seite des aufvulkanisierten Elastomers Material abgeschliffen werden. In Richtung quer zur Drehachse der Dosierwalze kann das Material über die gesamte Breite der Filterleiste entfernt werden. Dies erleichtert die Herstellung der Druckflächen.

Vorteilhaft ist das aufvulkanisierte Elastomer ein Synthesekautschuk, insbesondere Nitrilkautschuk. Besonders vorteilhaft ist das aufvulkanisierte Elastomer Silikon.

Zweckmäßig ist die Filterleiste aus Aluminium. Dadurch ergibt sich eine feste Verbindung zwischen dem Elastomer und der Filterleiste.

Ein Ausführungsbeispiel der Erfindung ist nachfolgend anhand der Zeichnung näher beschrieben. Es zeigen:
- Fig. 1: in einer schematischen Querschnittdarstellung einen Walzendosierer mit einer Dosierwalze mit einem Walzenmantel und Filterleisten mit einer Dichtung, über die ein Filterelement mittels eines Spannkerns gegen eine Innenseite des Walzenmantels gepresst wird,
- Fig. 2: in einem schematischen Schnitt entlang der in Fig. 3 dargestellten Schnittlinie II-II eine der Filterleisten mit Dichtung aus Fig. 1 und
- Fig. 3: in einer schematischen Seitenansicht die Filterleiste mit Dichtung aus Fig. 2.

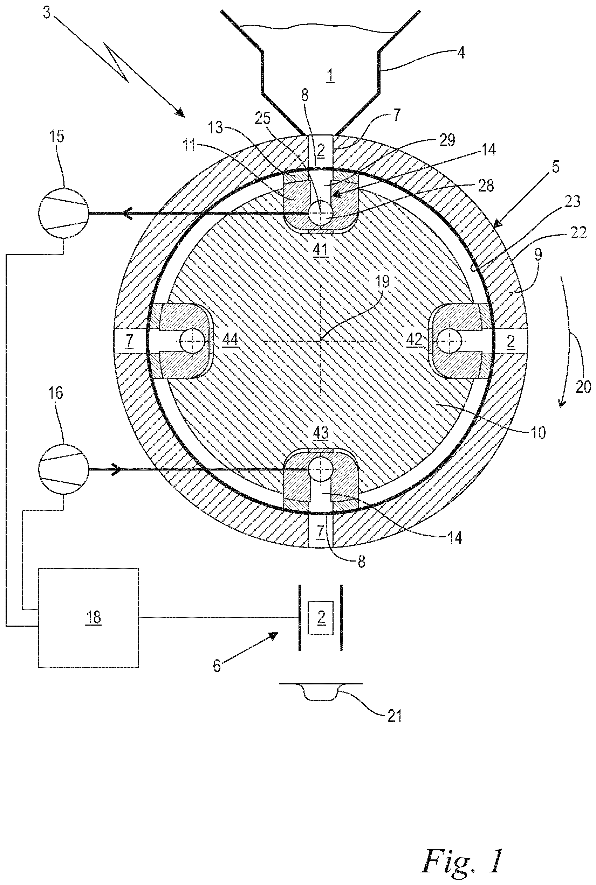

Fig. 1 zeigt in einer schematischen Querschnittdarstellung einen Walzendosierer 3 bei der Erzeugung einzelner Dosiermengen 2 eines pulvrigen Produkts 1 und zur Überführung solcher einzelner Dosiermengen 2 in einen Zielbehälter 21. Bei dem pulvrigen Produkt handelt es sich hier um ein pharmazeutisches Pulver. Es kann sich aber auch um ein pulverförmiges Nahrungsergänzungsmittel oder dergleichen handeln. Der Zielbehälter 21 ist hier ein schematisch angedeuteter Blister, der nach der Befüllung noch mit einer Deckfolie versiegelt wird. Als Zielbehälter 21 kommen aber auch Stecckapseln oder andere Behälter in Betracht.

Der Walzendosierer 3 umfasst einen Produktvorrat 4, eine Dosierwalze 5 und eine Messvorrichtung 6. Im trichterförmigen Produktvorrat 4 wird das pulvrige Produkt 1 zur Abmessung bereitgehalten. Mittels der Dosierwalze werden aus dem Produktvorrat 4 Teilmengen des pulvrigen Produkts 1 entnommen und daraus volumetrisch exakt definierte Dosiermengen 2 gebildet. Eine anschließende Massenbestimmung einzelner, insbesondere aller Dosiermengen 2 erfolgt mittels der Messvorrichtung 6.

Die Dosierwalze 5 erstreckt sich entlang einer Längsachse und ist bezogen auf diese Längsachse im Wesentlichen zylindrisch ausgebildet. Umfangsseitig weist die Dosierwalze 5 mindestens eine Dosieröffnung 7 auf. Im gezeigten bevorzugten Ausführungsbeispiel ist die Dosierwalze 5 mit mehreren Dosieröffnungen 7 versehen. Obwohl in der hier gezeigten Querschnittsdarstellung nicht erkennbar, bilden jeweils drei bis zwölf Dosieröffnungen 7 eine Öffnungsreihe, die achsparallel zu einer Drehachse 19 der Dosierwalze 5 verläuft. Vier solcher Öffnungsreihen sind in Umfangsrichtung 20 der Dosierwalze 5 um die Drehachse 19 herum in gleichen Winkelabständen, also in 90° zueinander positioniert. Von den genannten Öffnungsreihen sind hier je eine, also insgesamt vier Dosieröffnungen 7 erkennbar. In Achsrichtung und/oder in Umfangsrichtung können aber auch abweichende Anzahlen von Dosieröffnungen 7 zweckmäßig sein.

Die Dosierwalze 5 weist einen zentralen Spannkern 10 und einen den Spannkern 10 mit radialem Abstand umschließenden Walzenmantel 9 auf. Der Walzenmantel 9 ist ein hohlzylindrischer Mantelkörper. Die Dosieröffnung 7 ist als den Walzenmantel 9 radial durchgreifende Bohrung mit kreisförmigem Grundriss ausgebildet. Es können aber auch andere Grundrissformen zweckmäßig sein. Beispielsweise kann die Form des Grundrisses lediglich teilweise rund, oval, vieleckig, rechteckig oder quadratisch sein. Radial nach außen, also an einer Außenseite 22 des Walzenmantels 9, ist die Dosieröffnung 7 offen. Radial nach innen, also an einer Innenseite 23 des Walzenmantels 9, ist die Dosieröffnung 7 mittels eines Filterelements 8 begrenzt, welches in Größe und Form dem Querschnitt der Dosieröffnung 7 entspricht und deren Boden bildet.

Korrespondierend zur Anzahl der oben genannten Öffnungsreihen weist der Spannkern 10 eine Anzahl von achsparallelen zur Drehachse 19 verlaufenden Aufnahmenuten auf, in denen je eine Filterleiste 11 gehalten ist. Zwischen der Filterleiste 11 und der Innenseite 23 des Walzenmantels 9 ist eine Dichtung 13 angebracht.

In den Filterleisten 11 ist je ein verzweigter Druckkanal 14 ausgebildet, welcher durch die Filterelemente 8 hindurch in korrespondierende Dosieröffnungen 7 hinein mündet. Der Druckkanal 14 umfasst einen Hauptkanal 28 und mindestens eine Verzweigung 29. Im Ausführungsbeispiel umfasst der Druckkanal 14 zwölf Verzweigungen 29 korrespondierend zu einer entsprechenden Anzahl von Dosieröffnungen 7 innerhalb einer achsparallelen Reihe davon. Der Hauptkanal 28 erstreckt sich entlang einer Längsachse 25 des Druckkanals 14. Die Längsachse 25 verläuft parallel zur Drehachse 19 der Dosierwalze 5. Die Verzweigungen 29 des Druckkanals 14 erstrecken sich ausgehend vom Hauptkanal 28 radial bezüglich der Drehachse 19 bis zu den Dosieröffnungen 7.

Die Filterelemente 8 sind gemeinsam durch einen Bogen aus geeignetem Filtermaterial gebildet, welcher um den Spannkern 10 mit den Filterleisten 11 herum gewickelt ist. Es können auch aufgeklebte Filterelemente 8 zum Einsatz kommen. Die Filterleisten 11 sind über einen nicht dargestellten Spannkonus radial nach außen unter Zwischenlage des Filtermaterials gegen die Innenseite des Walzenmantels 9 verspannt. Die Dichtungen 13 pressen dabei einerseits das Filtermaterial gegen die Innenseite des Walzenmaterials, während sie andererseits rings um das jeweilige Filterelement 8 herum die zugehörige Verzweigung 29 des Druckkanals 14 sowie auch die jeweilige Dosieröffnung 7 gegen die Umgebung abdichten. Hierdurch ist sichergestellt, dass ein Druckausgleich zwischen Dosieröffnung und Druckkanal 14 allein durch das zugehörige Filterelement 8 hindurch erfolgt, und dass also die Dosieröffnungen 7 über den zugeordneten Druckkanal 11 durch das jeweilige Filterelement 8 hindurch mit einem bestimmten gewünschten Druck beaufschlagt werden können.

Die Dosierwalze 5 ist um die Drehachse 19 in Richtung eines Pfeils 20 drehbar gelagert und mit einem zugehörigen, hier nicht dargestellten Drehantrieb versehen. Im Betrieb wird die Dosierwalze 5 getaktet gedreht, wobei die einzelnen Dosieröffnungen 7 in mindestens zwei Takten zyklisch in einer in Gewichtskraftrichtung oberen Füllposition 41 und einer in Gewichtskraftrichtung unteren Ausstoßposition 43 zu liegen kommen. Anstelle einer getakteten Bewegung kann auch eine kontinuierliche Drehung zweckmäßig sein. Im gezeigten Ausführungsbeispiel durchlaufen die einzelnen Dosieröffnungen 7 in vier Takten zyklisch vier verschiedene Positionen, beginnend mit der oberen Füllposition 41, gefolgt von einer ersten Zwischenposition 42. Danach folgen die untere Ausstoßposition 43 und eine zweite Zwischenposition 44, bevor der Zyklus an der oberen Füllposition 41 wieder beginnt. In der oberen Füllposition 41 wird die jeweilige Dosieröffnung 7 mit dem pulvrigen Produkt 1 unter Bildung einer Dosiermenge 2 aus dem Produktvorrat 4 heraus befüllt. In der nachfolgenden ersten Zwischenposition 42 kann optional eine Füllstandskontrolle vorgenommen werden. In der unteren Ausstoßposition 43 wird die Dosiermenge 2 aus der Dosieröffnung 7 ausgestoßen und dem Zielbehälter 21 zugeführt. Die nunmehr entleerte Dosieröffnung 7 wird zur zweiten Zwischenposition 44 weiterbewegt und kann dort optional beispielsweise durch Ausblasen gereinigt werden.

Die Dosieröffnungen 7 sind innenseitig und durch das jeweilige Filterelement 8 hindurch bei Bedarf mit einem Unterdruck beaufschlagbar. Hierzu wird zumindest in der Füllposition 41 eine unterdruckübertragende Verbindung zwischen dem Druckkanal 14 und einer Unterdruckquelle 15 hergestellt. Das Niveau des von der Unterdruckquelle 15 bereitgestellten Unterdrucks wird mittels eines schematisch angedeuteten Steuergeräts 18 eingestellt, was durch eine geeignete Steuerung, gegebenenfalls aber auch durch eine Regelung erfolgen kann. Jedenfalls überträgt sich der solchermaßen eingestellte Unterdruck durch den Druckkanal 14 und das Filterelement 8 hindurch in die Dosieröffnung 7, wenn diese sich in der oberen Füllposition 41 befindet. Der Unterdruck saugt das pulvrige Produkt 1 aus dem Produktvorrat 4 in die Dosieröffnung 7. Das Filterelement 8 ist hinsichtlich seiner Durchlässigkeit derart bemessen und auf das Produkt 1 abgestimmt, dass es zwar luftdurchlässig und damit auch druckübertragend ist, dass aber das pulvrige Produkt 1 zurückgehalten und am Durchtritt gehindert wird. Folglich entsteht eine Dosiermenge 2 des pulvrigen Produkts 1, die die Dosieröffnung 7 vollständig ausfüllt, und deren Volumen dem Volumen der Dosieröffnung 7 entspricht. Der Vorgang des Ausfüllens kann noch optional durch einen nicht dargestellten Rührer im Produktvorrat 4 unterstützt werden. Abhängig vom Niveau des herrschenden Unterdrucks und von den Eigenschaften des Produkts 1 stellt sich jedenfalls ein bestimmter Verdichtungsgrad des Produkts 1 in der Dosieröffnung 7 ein, so dass aus dem vorgegebenen Volumen der Dosieröffnung 7 auch eine bestimmte Masse der Dosiermenge 2 folgt.

Der anliegende Unterdruck kann auf gleichem oder auch auf verringertem Niveau noch bis zum Erreichen der Ausstoßposition 43 aufrechterhalten werden, um ein vorzeitiges Herausfallen der Dosiermenge 2 aus der Dosieröffnung 7 zu verhindern. Spätestens beim Erreichen der unteren Ausstoßposition 43 wird jedoch die Unterdruckbeaufschlagung beendet, so dass die Dosiermenge 2 hier aus der Dosieröffnung 7 heraustritt und in den Zielbehälter 21 überführt wird. Dies kann durch einfaches Abschalten der Unterdruckbeaufschlagung erreicht werden, so dass die Dosiermenge 2 in Folge ihres Eigengewichts aus der Dosieröffnung 7 herausfällt. Im gezeigten bevorzugten Ausführungsbeispiel wird jedoch die Dosieröffnung 7 in der Ausstoßposition 43 durch das Filterelement 8 hindurch anstelle von Unterdruck nun mit Überdruck beaufschlagt. Hierzu wird eine überdruckübertragende Verbindung zwischen dem Druckkanal 14 und einer Überdruckquelle 16 hergestellt. Das Niveau des von der Überdruckquelle 16 bereitgestellten Überdrucks wird ebenso wie im vorgenannten Fall der Unterdruckquelle mittels des schematisch angedeuteten Steuergeräts 18 eingestellt, was erneut durch eine geeignete Steuerung, gegebenenfalls aber auch durch eine Regelung erfolgen kann. Jedenfalls überträgt sich der solchermaßen eingestellte Überdruck durch den Drucckanal 14 und das Filterelement 8 hindurch in die Dosieröffnung 7, wenn diese sich in der unteren Ausstoßposition 43 befindet. Der Überdruck bläst die Dosiermenge aus der Dosieröffnung 7 heraus. Ergänzend kann die Überdruckbeaufschlagung noch in der nachfolgenden zweiten Zwischenposition 44 für den dortigen Reinigungsvorgang der entleerten Dosieröffnung 7 verwendet werden.

Die zwischen dem Filterelement 8 und der Filterleiste 11 angeordnete Dichtung 13 ist ein auf die Filterleiste 11 aufvulkanisiertes Elastomer. Als Aufvulkanisieren wird das Herstellen einer dauerhaften, verliersicheren Verbindung beispielsweise zwischen einem Metall und einem Elastomer während der Vernetzung des Grundstoffes zum Elastomer bezeichnet. Die molekulare Vernetzung wird gleichzeitig auch für die Herstellung einer stoffschlüssigen Verbindung genutzt.

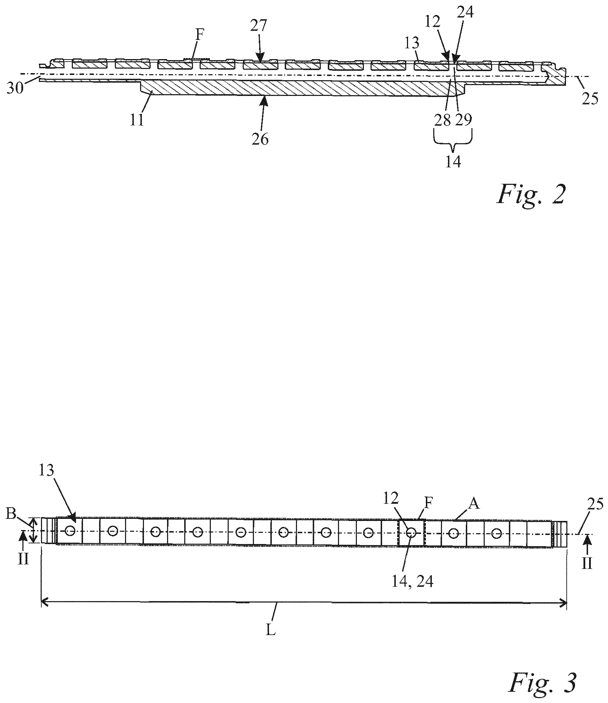

Fig. 2 zeigt die Filterleiste 11 in einem Schnitt entlang der in Fig. 3 dargestellten Schnittlinie II-II. Die Schnittlinie II-II verläuft entlang der Längsachse 25 des Hauptkanals 28 des Druckkanals 14. Die Verzweigungen 29 des Druckkanals 14 verlaufen senkrecht zur Längsachse 25 und verbinden den Hauptkanal 28 mit Kanalöffnungen 24. Die Filterleiste 11 weist mindestens zwei Kanalöffnungen 24 auf. Die mindestens zwei Kanalöffnungen 24 liegen in Richtung der Längsachse 25, bzw. in Richtung der Drehachse 19, nebeneinander. Im Ausführungsbeispiel weist die Filterleiste 11 zwölf Kanalöffnungen 24 auf. Die Kanalöffnungen 24 münden in die Dosieröffnungen 7 und sind ebenfalls von den Filterelementen 8 begrenzt. Der Hauptkanal 28 ist mit seinem den Verzweigungen 29 abgewandt liegenden Ende 30 in der Füllposition 41 mit der Unterdruckquelle 15 und in der Ausstoßposition 43 mit der Überdruckquelle 16 verbunden.

Die Filterleiste 11 besitzt eine Unterseite 26, die dem Spannkern 10 zugewandt ist, wie in Fig. 1 dargestellt. Eine Oberseite 27 der Filterleiste 11 ist der Innenseite 23 des Walzenmantels 9 zugewandt. Die als aufvulkanisiertes Elastomer ausgebildete Dichtung 13 ist auf die Oberseite 27 der Filterleiste 11 aufgebracht.

Bei der Herstellung der Dichtung 13 wird noch bevor die Kanalöffnungen 24 des Druckkanals 14 in die Filterleiste 11 eingebracht werden nahezu die gesamte Oberseite 27 der Filterleiste 11 einschließlich der Stellen, an denen die Kanalöffnungen 24 vorgesehen sind, mit dem aufvulkanisierten Elastomer abgedeckt. Anschließend werden Bohrungen 12 in das aufvulkanisierte Elastomer eingebracht. Im selben Herstellungsschritt werden auch die Kanalöffnungen 24 hergestellt. Das aufvulkanisierte Elastomer und die Filterleiste 11 im Bereich zwischen dem Elastomer und dem Hauptkanal 28 werden in einem einzigen Bohrvorgang durchbohrt. Die Bohrungen 24 durchdringen das aufvulkanisierte Elastomer in Richtung senkrecht zur Längsachse 25, bzw. radial zur Drehachse 19, und verbinden die Kanalöffnungen 24 mit den Dosieröffnungen 7.

Fig. 3 zeigt die Filterleiste 11 und die Dichtung 13 in einer Ansicht von oben, senkrecht auf die Längsachse 25 auf die Dichtung 13. Die Filterleiste 11 besitzt eine Verbindungsfläche A, die der Dichtung 13 zugewandt ist. Wie in Fig. 3 zu erkennen, ist die Verbindungsfläche A nahezu vollständig von der Dichtung 13 abgedeckt. Der Umriss der verdeckten Verbindungsfläche ist gepunktet in Fig. 3 eingezeichnet. Die Verbindungsfläche A erstreckt sich über mindestens 90% einer in Richtung der Längsachse 25 der Filterleiste 11 gemessenen Länge L der Filterleiste 11. In Richtung senkrecht zur Längsrichtung 25 entlang eines Teilabschnitts des Umfangs der in Fig. 1 dargestellten Innenseite 23 des Walzenmantels 9 erstreckt sich die Verbindungsfläche A über die gesamte Breite B der Filterleiste 11.

Das aufvulkanisierte Elastomer erstreckt sich über die gesamte der Innenseite 23 des Walzenmantels 9 zugewandte Verbindungsfläche A der Filterleiste 11 und ist lediglich durch die Bohrungen 12 zur fluidischen Verbindung des Druckkanals 14 mit der Dosieröffnung 7 durchbrochen. Die durch das auf die Filterleiste 11 aufvulkanisierte Elastomer gebildete einzige Dichtung 13 dichtet die Verbindung einer einzelnen Kanalöffnung 24 mit einer der jeweiligen Kanalöffnung 24 zugeordneten Dosieröffnung 7 ab. Im Ausführungsbeispiel dichtet die Dichtung 13 die Verbindung von zwölf Kanalöffnungen 24 mit zwölf Dosieröffnungen 7 ab.

Die Durchmesser der Bohrungen 12 sind im Ausführungsbeispiel alle gleich groß. Es kann jedoch auch vorgesehen sein, dass die Durchmesser der Bohrungen 12 unterschiedlich groß sind. Benachbarte Bohrungen 12 sind in Richtung der Längsachse 25 gemessen in gleichen Abständen zueinander angeordnet. Es können aber auch unterschiedliche Abstände zwischen benachbarten Bohrungen 12 vorgesehen sein. Wie in den Fig. 1 und 2 ersichtlich, ist der Durchmesser der Bohrung 12 mindestens so groß wie der Durchmesser der Kanalöffnung 24.

Wie in Fig. 3 dargestellt, weist der Druckkanal 14 an seinem der Innenseite 23 des Walzenmantels 9 zugewandten Ende die Kanalöffnung 24 auf. Die Kanalöffnung 24 liegt am Ende einer Verzweigung 29 des Druckkanals 14. In einem Bereich um die Kanalöffnung 24 herum weist das aufvulkanisierte Elastomer eine Druckfläche F zur Anpressung des Filterelements 8 an der Innenseite 23 des Walzenmantels 9 auf. Die Druckfläche F ist der Oberseite 27 der Filterleiste 11 abgewandt. Wie sich aus den Figuren 1 bis 3, insbesondere aus Fig. 2, ergibt, steht die Druckfläche F in Richtung auf die Innenseite 23 des Walzenmantels 9 hervor. Der äußere Umriss der Druckfläche F ist rechteckig. Es kann aber auch vorgesehen sein, dass der äußere Umriss der Druckfläche eine andere Form aufweist. Der äußere Umriss kann beispielsweise rund oder kreisförmig sein. Die Bohrungen 12 sind innerhalb der Druckflächen F angeordnet. Im Ausführungsbeispiel sind die Bohrungen 12 in der Mitte der Druckflächen F angeordnet. Eine Kantenlänge der rechteckigen Druckfläche F ist mindestens doppelt so groß wie der Durchmesser der Bohrung 12. Die Kantenlängen der Druckfläche F sind kleiner als der vierfache Durchmesser der Bohrung 12. Im Ausführungsbeispiel erstreckt sich die Druckfläche F über die gesamte Breite B der Filterleiste 11.

Das aufvulkanisierte Elastomer kann jedes geeignete Elastomer, insbesondere Nitrilkautschuk sein. Im Ausführungsbeispiel ist das aufvulkanisierte Elastomer aufvulkanisiertes Silikon. Die Filterleiste 11 ist aus Metall. Bevorzugt ist die Filterleiste 11 aus Aluminium.

## Patentansprüche

1. Dosierwalze zum Befüllen eines Zielbehälters (21) mit einer zu dosierenden Teilmenge eines pulvrigen Produkts (1) umfassend:
- einen Walzenmantel (9),
- ein Filterelement (8),
- eine Filterleiste (11),
- eine Dichtung (13) und
- einen Spannkern (10),
wobei der Walzenmantel (9) mit mindestens einer den Walzenmantel (9) von seiner Außenseite (22) zu seiner Innenseite (23) vollständig durchdringenden Dosieröffnung (7) versehen ist, wobei die Dosieröffnung (7) innenseitig mittels des Filterelements (8) begrenzt ist, wobei das Filterelement (8) über die Filterleiste (11) von dem Spannkern (10) gegen die Innenseite (23) des Walzenmantels (9) gepresst ist, wobei die Dosieröffnung (7) durch das Filterelement (8) hindurch über mindestens einen Druckkanal (14) in der Filterleiste (11) mit einem Unterdruck beaufschlagbar ist, **dadurch gekennzeichnet, dass** zwischen dem Filterelement (8) und der Filterleiste (11) die Dichtung (13) angeordnet ist, wobei die Dichtung (13) eine Verbindung des Druckkanals (14) mit der Dosieröffnung (7) abdichtet, wobei die Dichtung (13) ein auf die Filterleiste (11) aufvulkanisiertes Elastomer ist.

2. Dosierwalze nach Anspruch 1,
**dadurch gekennzeichnet, dass** das aufvulkanisierte Elastomer sich über eine gesamte der Innenseite (23) des Walzenmantels (9) zugewandte Verbindungsfläche (A) der Filterleiste (11) erstreckt und lediglich durch eine Bohrung (12) zur fluidischen Verbindung des Druckkanals (14) mit der Dosieröffnung (7) durchbrochen ist.

3. Dosierwalze nach Anspruch 1 oder 2,
**dadurch gekennzeichnet, dass** der Druckkanal (14) an seinem der Innenseite (23) des Walzenmantels (9) zugewandten Ende eine Kanalöffnung (24) aufweist, und dass das aufvulkanisierte Elastomer in einem Bereich um die Kanalöffnung (24) herum eine Druckfläche (F) zur Anlage an der Innenseite (23) des Walzenmantels (9) aufweist, die in Richtung auf die Innenseite (23) des Walzenmantels (9) hervorsteht.

4. Dosierwalze nach einem der Ansprüche 1 bis 3,
**dadurch gekennzeichnet, dass** die Filterleiste (11) mindestens zwei Kanalöffnungen (24) aufweist, die in Richtung der Drehachse (19) des Walzenmantels (9) nebeneinander liegen.

5. Dosierwalze nach Anspruch 4, wenn abhängig von Anspruch 3, **dadurch gekennzeichnet, dass** die Druckflächen (F) des aufvulkanisierten Elastomers rechteckig ausgebildet sind.

6. Dosierwalze nach einem der Ansprüche 1 bis 5,
**dadurch gekennzeichnet, dass** das aufvulkanisierte Elastomer aufvulkanisiertes Silikon ist.

7. Dosierwalze nach einem der Ansprüche 1 bis 6,
**dadurch gekennzeichnet, dass** die Filterleiste (11) aus Aluminium ist.

## Claims

1. Dosing roller for filling a target container (21) with a sub-quantity of powdery product (1) to be dosed, comprising:
- a roller outer casing (9),
- a filter element (8),
- a filter bar (11),
- a seal (13) and
- a clamping core (10),
wherein the roller outer casing (9) is provided with at least one dosing opening (7) passing completely from its outside (22) to its inside (23), wherein the dosing opening (7) is bounded by means of the filter element (8) on the inside, wherein the filter element (8) is pressed against the inside (23) of the roller outer casing (9) via the filter bar (11) by the clamping core (10), wherein the dosing opening (7) can be subjected to a vacuum through the filter element (8) via at least one pressure passage (14) in the filter bar (11),
**characterised in that** the seal (13) is located between the filter element (8) and the filter bar (11), wherein the seal (13) seals a connection between the pressure passage (14) and the dosing opening (7), wherein the seal (13) is an elastomer vulcanised onto the filter bar (11).

2. Dosing roller according to claim 1,
**characterised in that** the vulcanised-on elastomer extends over an entire connecting surface (A) - facing the inside (23) of the roller outer casing (9) - of the filter bar (11) and is only broken by a bore (12) for the fluidic connection of the pressure passage (14) to the dosing opening (7).

3. Dosing roller according to claim 1 or 2,
**characterised in that** the pressure passage (14) has at the end facing the inside (23) of the roller outer casing (9) a passage opening (24), and **in that** the vulcanised-on elastomer has in a region around the passage opening (24) a pressure surface (F) for contact on the inside (23) of the roller outer casing (9), which pressure surface (F) protrudes in the direction of the inside (23) of the roller outer casing (9).

4. Dosing roller according to any of claims 1 to 3,
**characterised in that** the filter bar (11) has at least two passage openings (24) lying next to each other in the direction of the axis of rotation (19) of the roller outer casing (9).

5. Dosing roller according to claim 4 if dependent on claim 3,
**characterised in that** the pressure surfaces (F) of the vulcanised-on elastomer are rectangular.

6. Dosing roller according to any of claims 1 to 5,
**characterised in that** the vulcanised-on elastomer is vulcanised-on silicone.

7. Dosing roller according to any of claims 1 to 6,
**characterised in that** the filter bar (11) is made of aluminium.

## Revendications

1. Cylindre doseur pour remplir un récipient cible (21) avec une quantité partielle à doser d'un produit pulvérulent (1), comprenant :
- une enveloppe de cylindre (9),
- un élément filtrant (8),
- une barre filtrante (11),
- un joint d'étanchéité (13) et
- un noyau de serrage (10),
dans lequel l'enveloppe de cylindre (9) est pourvue d'au moins une ouverture de dosage (7) traversant complètement l'enveloppe de cylindre (9) de son côté extérieur (22) jusqu'à son côté intérieur (23), dans lequel l'ouverture de dosage (7) est limitée côté intérieur au moyen de l'élément filtrant (8), dans lequel l'élément filtrant (8) est pressé par le noyau de serrage (10) par l'intermédiaire de la barre filtrante (11) contre le côté intérieur (23) de l'enveloppe de cylindre (9), dans lequel l'ouverture de dosage (7) est apte à être contrainte par une dépression à travers l'élément filtrant (8) par l'intermédiaire d'au moins un canal de pression (14) dans la barre filtrante (11),
**caractérisé en ce qu'**entre l'élément filtrant (8) et la barre filtrante (11) est disposé le joint d'étanchéité (13), dans lequel le joint d'étanchéité (13) rend étanche une liaison du canal de pression (14) avec l'ouverture de dosage (7), dans lequel le joint d'étanchéité (13) est un élastomère appliqué par vulcanisation sur la barre filtrante (11).

2. Cylindre doseur selon la revendication 1,
**caractérisé en ce que** l'élastomère appliqué par vulcanisation s'étend sur toute une surface de liaison (A) de la barre filtrante (11) tournée vers le côté intérieur (23) de l'enveloppe de cylindre (9) et est seulement percé par un perçage (12) pour une liaison fluide du canal de pression (14) avec l'ouverture de dosage (7).

3. Cylindre doseur selon la revendication 1 ou 2,
**caractérisé en ce que** le canal de pression (14) présente à son extrémité tournée vers le côté intérieur (23) de l'enveloppe de cylindre (9) une ouverture de canal (24), et **en ce que** l'élastomère appliqué par vulcanisation présente dans une zone tout autour de l'ouverture de canal (24) une surface de pression (F) pour une application contre le côté intérieur (23) de l'enveloppe de cylindre (9), qui fait saillie en direction du côté intérieur (23) de l'enveloppe de cylindre (9).

4. Cylindre doseur selon l'une des revendications 1 à 3,
**caractérisé en ce que** la barre filtrante (11) présente au moins deux ouvertures de canal (24) qui sont juxtaposées dans la direction de l'axe de rotation (19) de l'enveloppe de cylindre (9).

5. Cylindre doseur selon la revendication 4, quand elle est dépendante de la revendication 3,
**caractérisé en ce que** les surfaces de pression (F) de l'élastomère appliqué par vulcanisation ont une forme rectangulaire.

6. Cylindre doseur selon l'une des revendications 1 à 5,
**caractérisé en ce que** l'élastomère appliqué par vulcanisation est un silicone appliqué par vulcanisation.

7. Cylindre doseur selon l'une des revendications 1 à 6,
**caractérisé en ce que** la barre filtrante (11) est en aluminium.
